# EUROPÄISCHE PATENTSCHRIFT

(11) **EP 4 431 886 B1**
(45) Veröffentlichungstag und Bekanntmachung des Hinweises auf die Patenterteilung: **31.12.2025**
(21) Anmeldenummer: 24160175.6
(22) Anmeldetag: 28.02.2024
(51) Int. Cl.: G01J 1/02, H02S 50/15, G01J 1/04, G01J 1/42, F24S 40/00

(54) **SOLARELEMENT MIT EINEM MESSSYSTEM ZUR BESTIMMUNG EINER ZUSTANDSÄNDERUNG EINES SENSORS FÜR SOLARSTRAHLUNG**
SOLAR ELEMENT WITH A MEASUREMENT SYSTEM FOR DETERMINING A STATE CHANGE OF A SENSOR FOR SOLAR RADIATION
ÉLÉMENT SOLAIRE COMPRENANT UN SYSTÈME DE MESURE POUR DÉTERMINER UN CHANGEMENT D'ÉTAT D'UN CAPTEUR DE RAYONNEMENT SOLAIRE

(30) Priorität: 13.03.2023 DE 202023101197 U
(43) Veröffentlichungstag der Anmeldung: 18.09.2024
(73) Patentinhaber: Deutsches Zentrum für Luft- und Raumfahrt e.V., 53227 Bonn (DE)
(72) Erfinder: Wilbert, Stefan, 51147 Köln (DE); Campos, Laura, 51147 Köln (DE); Schmidt, Karsten, 51147 Köln (DE); Borg, Erik, 51147 Köln (DE); Carballo, Jose Antonio, 51147 Köln (DE)
(74) Vertreter: dompatent

(56) Entgegenhaltungen:
- DE-B4- 102018 204 146
- LAURA CAMPOS ET AL: "Autonomous measurement system for photovoltaic and radiometer soiling losses", PROGRESS IN PHOTOVOLTAICS: RESEARCH AND APPLICATIONS, JOHN WILEY & SONS, LTD, HOBOKEN, USA, vol. 31, no. 12, 12 November 2022 (2022-11-12), pages 1336 - 1349, XP072537777, ISSN: 1062-7995, DOI: 10.1002/PIP.3650

## Beschreibung

Die vorliegende Erfindung betrifft ein Solarelement mit einem Messsystem zur Bestimmung einer Zustandsänderung eines Sensors für Solarstrahlung sowie ein Messsystem zur Bestimmung einer Zustandsänderung eines Sensors für Solarstrahlung.

Sensoren für Solarstrahlung werden zur Messung der Effizienz von Solarmodulen verwendet. Pyranometer sind ein Beispiel für solche Sensoren und werden zur Messung der Globalstrahlung der Sonne verwendet. Photovoltaische Referenzzellen sind ein weiteres Beispiel. Solarmodule, Sensoren für Solarstrahlung und Pyranometer sind Umgebungseinflüssen wie Staub und Regen ausgesetzt und neigen daher über die Zeit zu einer Verschmutzung. Eine derartige Verschmutzung führt zu einer verringerten Effizienz der Solarmodule und zu mangelhaften Messergebnissen von Sensoren. Der Verschmutzungsgrad stellt dabei einen Zustand des jeweiligen Sensors dar. Die Kenntnis des Zustands bzw. des Verschmutzungsgrades ist somit besonders vorteilhaft, damit evaluiert werden kann, ob der Sensor bzw. das Solarmodul auf Grund von Verschmutzung einer Inspektion oder einer Reinigung bedarf. Bisher sind regelmäßige Inspektionen und Reinigungsvorgänge erforderlich, um den Einfluss von Verschmutzung möglichst gering zu halten, wodurch beispielsweise den Betreibern von Solarparks Kosten und Aufwand entstehen.

Aus DE 10 2018 204146 B4 der Anmelderin ist ein Messsystem zur Bestimmung einer Zustandsänderung eines Pyranometers bekannt. Da Pyranometer unabhängig von den Solarmodulen angeordnet werden können, kann das System mit dem Pyranometer frei im Solarfeld positioniert werden. Für direkt an einem Modul angeordneten Sensoren, wie beispielsweise einer als Referenzzelle verwendeten Photovoltaikzelle ist das System nicht geeignet, da die Gefahr von Verschattung des Solarmoduls oder der Referenzzelle besteht. Durch die Verschattung wird einerseits die Leistungsfähigkeit des Solarmoduls und andererseits die Erfassung korrekter Messwerte durch die Referenzzelle beeinträchtigt. Das bekannte Messsystem zur Bestimmung einer Zustandsänderung eines Pyranometers hat darüber hinaus Nachteile bzgl. der Genauigkeit der Bestimmung einer Zustandsänderung.

LAURA CAMPOS ET AL: "Autonomous measurement system for photovoltaic and radiometer soiling losses", PROGRESS IN PHOTOVOLTAICS: RESEARCH AND AP-PLICATIONS, JOHN WILEY & SONS, LTD, HOBOKEN, USA, Bd. 31, Nr. 12, 12. November 2022 (2022-11-12), Seiten 1336-1349, XP072537777, ISSN: 1062-7995, DOI: 10.1002/PIP.3650 offenbart ein Solarelement mit den Merkmalen des Oberbegriffs von Anspruch 1.

Es ist daher Aufgabe der vorliegenden Erfindung, ein Solarelement mit einem Messsystem zur Verfügung zu stellen, mit dem die Zustandsänderung eines Sensors für Solarstrahlung in vorteilhafter Weise bestimmt werden kann. Ferner ist es Aufgabe der vorliegenden Erfindung, ein verbessertes Messsystem zur Verfügung zu stellen, mit dem die Zustandsänderung eines Solarstrahlungssensors in vorteilhafter Weise bestimmt wird.

Das erfindungsgemäße Solarelement mit einem Messsystem zur Bestimmung einer Zustandsänderung eines Sensors für Solarstrahlung ist definiert durch die Merkmale des Anspruchs 1.

Das erfindungsgemäße Solarelement weist mindestens eine Fläche, die eine Receiverfläche und eine Receiverebene definiert, sowie einen Sensor für Solarstrahlung mit einer Sensorebene auf, wobei der Sensor neben oder unterhalb der Fläche angeordnet ist, und ferner ein Messsystem zur Bestimmung einer Zustandsänderung des Sensors für Solarstrahlung. Der Sensor mit der Sensorebene ist parallel oder in einem Winkel von maximal ±10° zu der Receiverebene oder in der Receiverebene angeordnet.

Ferner weist das Messsystem des Solarelements mindestens eine Strahlungsvorrichtung und eine Auswertevorrichtung auf. Die Strahlungsvorrichtung weist eine elektromagnetische Strahlung emittierende Strahlungsquelle auf, wobei die elektromagnetische Strahlung entlang einer optischen Achse A emittiert wird und auf den Sensor gerichtet ist. Die Auswertevorrichtung steuert die mindestens eine Strahlungsquelle an, erfasst mindestens einen Messwert des Sensors und bestimmt die Zustandsänderung des Sensors durch einen Vergleich des mindestens einen erfassten Messwertes mit mindestens einem zuvor ermittelten Messwert. Erfindungsgemäß ist Strahlungsvorrichtung unterhalb einer Ebene angeordnet ist, die durch eine Oberkante des Sensors verläuft und in einem Winkel α≤10°, vorzugsweise α≤5°, zur Horizontalen Richtung des Sensors geneigt ist.

Die Fläche kann insbesondere eine Fläche sein, die nicht verschattet werden soll. Beispielswese kann die Fläche durch ein Solarmodul gebildet sein.

Beispielsweise kann die optische Achse A in einem Einfallswinkel zwischen 10 und 60° auf die Sensorebene S gerichtet sein, vorzugsweise in einem Winkel kleiner 45°, besonders bevorzugt kleiner 40°.

Durch eine derartige Anordnung der Strahlungsvorrichtung emittiert die Strahlungsquelle die elektromagnetische Strahlung in einem relativ flachen Winkel auf den Sensor. Die Strahlungsvorrichtung ist somit derartig zu dem Sensor und dem Solarelement angeordnet, dass - unabhängig von dem Einfallswinkel der Solarstrahlung - eine Verschattung des Sensors oder der Fläche weitestgehend vermieden wird. Somit kann die Auswertevorrichtung die Zustandsänderung des Sensors für Solarstrahlung bestimmen, ohne dass Verschattungen auftreten, die die Messwerterfassung negativ beeinträchtigen.

Das Solarelement kann beispielsweise einen Rahmen aufweisen, an dem das Solarmodul gehaltert ist. Der Sensor kann beispielsweise an dem Rahmen angeordnet sein. Das Messsystem des Solarelements kann ferner einen Geräteträger aufweisen, der die Strahlungsvorrichtung haltert. Der Geräteträger kann nach unten von der nicht zu verschattenden Fläche abstehen und beispielsweise an dem Rahmen befestigt sein.

Das Merkmal des nach unten abstehenden Geräteträger bedeutet, dass dieser vertikal oder in einem Winkel zur Vertikalen absteht. Beispielsweise kann der Geräteträger parallel zu der Receiverebene von dem Rahmen abstehen. Dadurch wird verhindert, dass der Geräteträger eine Verschattung von Sensor oder Fläche hervorrufen kann.

Durch die parallele oder maximal um einem Winkel von ±10° abweichende Anordnung von der Sensorebene und der Receiverebene trifft eine Solarstrahlung in einem annähernd gleichem Einfallswinkel auf den Sensor wie auf die Fläche. Die natürliche Bestrahlung des Sensors entspricht somit der natürlichen Bestrahlung der Fläche, beispielsweise des Solarmoduls, sodass in vorteilhafterweise von dem Zustand des Sensors auf den Zustand des Solarelements geschlossen werden kann.

Die elektromagnetische Strahlung, die die Strahlungsquelle in Richtung des Sensors emittiert, kann beispielsweise Licht im sichtbaren Wellenlängenbereich sein. Durch den Verlauf der optischen Achse A, entlang derer die elektromagnetische Strahlung emittiert wird, wird die Richtung, in die die elektromagnetische Strahlung emittiert wird, vorgegeben. Durch die Verwendung der elektromagnetische Strahlung emittierenden Strahlungsquelle ist das Messsystem unabhängig von der Umgebungsbeleuchtung, beispielweise der Solarstrahlung, sodass die Zustandsänderung in vorteilhafterweise auch bei Nacht bestimmt werden kann.

Die Auswertevorrichtung steuert die Strahlungsquelle an und bestrahlt somit den Sensor für Solarstrahlung mit der emittierten Strahlung. Durch die emittierte Strahlung erzeugt der beispielswiese verschmutzte Sensor einen Messwert. Diesen Messwert erfasst die Auswertevorrichtung und vergleicht diesen mit einem zuvor ermittelten Messwert, beispielsweise mit einem Messwert eines weniger verschmutzten Sensors. Aus dem Vergleich beider Messwerte bestimmt die Auswertevorrichtung dann die Zustandsänderung des Sensor, beispielsweise einen Verschmutzungsgrad. Der Zustand, dessen Änderung die Auswertevorrichtung bestimmt, kann im Rahmen der Erfindung auch ein etwaiger Defekt des Sensors sein.

Als Geräteträger, über den die Strahlungsvorrichtung beispielsweise mit dem Rahmen verbunden ist, eignen sich beispielsweise herkömmliche Profilkonstruktionen.

Bei dem erfindungsgemäßen Solarelement sind die Strahlungsvorrichtung des Messsystems und der Sensor für Solarstrahlung derartig zueinander ausgerichtet, dass eine Verschattung des Solarelements durch das Messsystem in vorteilhafter Weise weitestgehend vermieden wird. Mit anderen Worten: Die Strahlungsvorrichtung des Messsystems strahlt mit einem relativ flachen Winkel auf den Sensor, sodass, unabhängig vom Stand der Sonne, Bestandteile des Messsystems keinen Schatten auf das Solarelement oder auf den Sensor werfen. Somit kann die Zustandsänderung des Sensors für Solarstrahlung besonders zuverlässig und ohne das Auftreten von Verschattungen, die die Messwerterfassung negativ beeinträchtigen, bestimmt werden.

Vorzugsweise ist vorgesehen, dass die Strahlungsquelle eine LED ist. Durch die LED als Strahlungsquelle kann die elektromagnetische Strahlung besonders energiesparend emittiert werden. Selbstverständlich kann die eine LED auch aus einem Zusammenschluss mehrere LEDs, einem Array, bestehen.

Vorzugsweise ist vorgesehen, dass an der Strahlungsquelle ein Temperatursensor zur Erfassung der Temperatur der Strahlungsquelle angeordnet ist. Ein derartiger Temperatursensor kann beispielsweise als ein PT100-Temperatursensor ausgebildet sein. Der Temperatursensor kann dabei direkt neben der Strahlungsquelle angeordnet sein, beispielsweise mit einem Abstand von maximal 1 cm. Der Temperatursensor kann auch einen Temperaturfühler aufweisen, der an der Strahlungsquelle angeschlossen ist, das heißt diese berührt. Durch die Anordnung des Temperatursensors an der Strahlungsquelle können in vorteilhafter Weise Messdaten bezüglich der Temperatur der Strahlungsquelle erfasst werden, woraus auf den Zustand der Strahlungsquelle, beispielsweise die Intensität der emittierten elektromagnetischen Strahlung, geschlossen werden kann.

An der Strahlungsquelle kann ein weiterer Strahlungssensor zur Erfassung der von der Strahlungsquelle emittierten Strahlung angeordnet sein. Die erfassten Strahlungswerte der Strahlungsquelle können zur Steuerung der Strahlungsquelle, zur Kontrolle der von der Strahlungsquelle emittierten Strahlung und/oder in der Bestimmung der Zustandsänderung des Sensors verwendet werden.

Vorzugsweise ist vorgesehen, dass die Strahlungsvorrichtung mindestens einen Kollimator aufweist. Der Kollimator kann dabei als hohlzylindrisches Gehäuse ausgebildet sein, wobei das offene Ende des Kollimators einen Strahlenausgang bildet und auf den Sensor für Solarstrahlung gerichtet ist. Durch die Ausgestaltung der Strahlungsvorrichtung mit einem Kollimator wird darüber hinaus die von der mindestens einen Strahlungsquelle erzeugte elektromagnetische Strahlung in vorteilhafter Weise gerichtet, wobei ein nahezu paralleler Strahlengang erzeugt wird. Dadurch ist eine besonders gleichmäßige Bestrahlung des Sensors möglich.

Das erfindungsgemäße Solarelement kann vorsehen, dass der Sensor für Solarstrahlung als eine Referenzzelle bildende Solarzelle ausgebildet ist.

Vorzugsweise ist vorgesehen, dass die Auswertevorrichtung die Zustandsänderung durch eine zusätzliche, zuvor durchgeführte Messung des Sensors bestimmt und Informationen mindestens eines Hintergrundsignals und/oder mindestens eines thermischen Offset-Wertes verwendet. Durch die Verwendung einer zusätzlichen weiteren Messung stehen der Auswertevorrichtung weitere Messwerte zur Verfügung, sodass die Zustandsänderung des Sensors besonders genau bestimmt werden kann. Für den Fall, dass der Zustand des Sensors beispielsweise einen Verschmutzungsgrad beschreibt, kann die zuvor durchgeführte weitere Messung des Sensors eine Messung im unverschmutzten bzw. gereinigten Zustand des Sensors sein. Diese Messung dient somit als weitere Referenzmessung und ein Verschmutzungsgrad des Sensors kann im Vergleich zu der Messung des verschmutzten Sensors in vorteilhafter Weise bestimmt werden.

Informationen mindestens eines Hintergrundsignals können beispielsweise Informationen bezüglich der Umgebungslichtverhältnisse sein. Derartige Umgebungslichtverhältnisse können beispielsweise die Lichtverhältnisse sein, die zu unterschiedlichen Tageszeiten, beispielsweise bei Eintritt der Dämmerung, in der Nacht oder zur Mittagszeit vorherrschen.

Der zusätzlich oder alternativ verwendete mindestens eine thermische Offset-Wert kann Informationen bezüglich der Umgebungstemperatur aufweisen. Die Intensität der emittierten elektromagnetischen Strahlung kann von der Umgebungstemperatur abhängig sein. Durch die Verwendung von Informationen bzgl. mindestens eines thermischen Offset-Wertes kann die Auswertevorrichtung die Zustandsänderung des Sensors in besonders vorteilhafter Weise zu unterschiedlichen Tageszeiten und/oder bei unterschiedlichen Temperaturbedingungen bestimmen.

Vorzugsweise ist vorgesehen, dass die Auswertevorrichtung die Strahlungsquelle zur Emission von elektromagnetischer Strahlung für mindestens eine Dauer einer

Stabilisierungszeit ansteuert, wobei die Auswertevorrichtung die Zustandsänderung nach der Stabilisierungszeit bestimmt. Die Stabilität der Intensität der emittierten elektromagnetischen Strahlung kann insbesondere nach dem Beginn der Emission der elektromagnetischen Strahlung gewissen Schwankungen unterliegen. Nach der Stabilisierungszeit weist die emittierte elektromagnetische Strahlung annähernd eine Konstanz auf, sodass die Auswertevorrichtung die Zustandsänderung nach der Stabilisierungszeit besonders vorteilhaft bestimmen kann. Dabei kann bei erhöhten Umgebungstemperaturen bevorzugt eine längere Stabilisierungszeit verwendet werden. Die Stabilisierungszeit kann eine vorgegebene oder in Bezug auf die Strahlungsquelle experimentell ermittelte Zeit sein.

Vorzugsweise ist vorgesehen, dass die Auswertevorrichtung die Zustandsänderung wiederholt bestimmt. Die Zustandsänderung des Sensors kann beispielsweise zu verschiedenen Tageszeiten, zu verschiedenen Jahreszeiten, oder bei mehrfach hintereinander durchgeführten Messungen bestimmt werden. Durch das wiederholte Bestimmen kann die Auswertevorrichtung die Zustandsänderung des Sensors besonders genau und zuverlässig bestimmen.

Vorzugsweise ist vorgesehen, dass die Auswertevorrichtung die Zustandsänderung in aufeinander folgenden Nächten bestimmt. Durch die nächtliche Bestimmung der Zustandsänderung des Sensors wird der Sensor nur geringfügig durch etwaiges Umgebungslicht, insbesondere durch Solarstrahlung, beeinträchtigt. Der Messwert, den der Sensor liefert, wird somit maßgeblich durch die von der Strahlungsquelle emittierte elektromagnetische Strahlung beeinflusst. Das Bestimmen der Zustandsänderung des Sensors bei Nacht ist somit besonders vorteilhaft. Ferner kann bei der Bestimmung der Zustandsänderung in aufeinander folgenden Nächten der Einfluss eines kurzfristig auftretenden Wetterereignisses zwischen den aufeinander folgenden Nächten in vorteilhafter Weise berücksichtigt werden. Beispielsweise können somit Informationen über den Einfluss eines nächtlichen Regenschauers auf die Zustandsänderung des Sensors gewonnen werden.

Vorzugsweise ist vorgesehen, dass die Auswertevorrichtung bei der Bestimmung der Zustandsänderung eine Einfallswinkelkorrektur und/oder des Einfallswinkels von im Betrieb auf den Sensor auftreffender Solarstrahlung vornimmt. Der Messwert des Sensors für Solarstrahlung, den die Auswertevorrichtung erfasst, ist abhängig von dem Winkel, unter dem die Strahlungsquelle die elektromagnetische Strahlung auf den Sensor richtet, und, am Tage, von dem Einfallswinkel der Solarstrahlung. Zur besseren Vergleichbarkeit unterschiedlicher Messungen der Zustandsänderung ist daher eine Einfallswinkelkorrektur von Vorteil. Ferner variiert tagsüber der Stand der Sonne über einem Solarmodul, und damit der Einfallswinkel der Solarstrahlung, die auf das Solarmodul auftrifft. Daher wird die auf ein verschmutztes Solarmodul auftreffende Strahlung, abhängig vom Einfallswinkel der Solarstrahlung, zu verschiedenen Tageszeiten unterschiedlich an einer Verschmutzung des Solarmoduls abgeschwächt. Dies führt bei einem unveränderten Verschmutzungsgrad des Sensors zu abweichenden Messwerten des Sensor. Mittels einer Einfallswinkelkorrektur kann dieser Effekt korrigiert werden.

Vorzugsweise ist vorgesehen, dass die Auswertevorrichtung die Zustandsänderung unter Verwendung von Informationen einer Temperatur der Strahlungsquelle bestimmt. Das erfindungsgemäße Solarelement kann in Regionen verwendet werden, in denen besonders abwechslungsreiche klimatische Bedingungen vorherrschen. Beispielsweise kann das Solarelement Tageshöchsttemperaturen jenseits von 40° C sowie Temperaturen unter dem Gefrierpunkt bei Nacht ausgesetzt sein. Dabei beeinflusst die Umgebungstemperatur direkt die Temperatur der Strahlungsquelle, welche wiederum die Intensität der emittierten elektromagnetischen Strahlung beeinflusst, wodurch die Bedingungen bei der Messwerterzeugung nachteilig inkonstant werden können. Mit anderen Worten: Unberücksichtigte Änderungen Temperatur der Strahlungsquelle können zu fehlerbehafteten Messwerten führen.

Informationen der Temperatur der Strahlungsquelle können beispielsweise mit dem Temperatursensor, der in oder an der Strahlungsquelle angeordnet ist, erfasst werden. Durch die Verwendung von Informationen der Temperatur der Strahlungsquelle kann die Auswertevorrichtung den Temperatureinfluss auf die Intensität der von der Strahlungsquelle emittierten, elektromagnetischen Strahlung berücksichtigen und die Zustandsänderung des Sensors kann somit in besonders vorteilhafter Weise oder besonders genau bestimmen. Die Temperatur der Strahlungsquelle lässt beispielsweise auch einen Rückschluss darauf zu, ob die emittierte elektromagnetische Strahlung konstant ist, wenn beispielsweise nach einer Stabilisierungszeit keine weitere Temperaturänderung der Strahlungsquelle erfolgt.

Das Messsystem zur Bestimmung einer Zustandsänderung eines Solarstrahlungssensors kann grundsätzlich vorsehen,
dass der Solarstrahlungssensor eine Sensorebene S aufweist, wobei das Messsystem mindestens eine Strahlungsvorrichtung und eine Auswertevorrichtung aufweist, wobei die Strahlungsvorrichtung eine elektromagnetische Strahlung emittierende Strahlungsquelle aufweist, und wobei die elektromagnetische Strahlung entlang einer optischen Achse A emittiert wird und auf den Solarstrahlungssensor gerichtet ist.

Die Auswertevorrichtung steuert die mindestens eine Strahlungsquelle an, erfasst mindestens einen Messwert des Solarstrahlungssensors und bestimmt die Zustandsänderung des Solarstrahlungssensors durch einen Vergleich des mindestens einen erfassten Messwert mit mindestens einem zuvor ermittelten Messwert.

Die optische Achse A kann in einem Einfallswinkel zwischen 10° und 60° auf die Sensorebene S gerichtet sein, vorzugsweise kleiner 45°, besonders bevorzugt kleiner 40°.

Die Auswertevorrichtung bestimmt die Zustandsänderung durch eine zusätzliche zuvor durchgeführte weitere Messung des Solarstrahlungssensors und verwendet Informationen mindestens eines Hintergrundsignals und/oder mindestens eines thermischen Offset-Wertes

Alternativ oder zusätzlich steuert die Auswertevorrichtung die Strahlungsquelle zur Emission von elektromagnetischer Strahlung für mindestens eine Dauer einer Stabilisierungszeit an, und die Auswertevorrichtung bestimmt die Zustandsänderung nach der Stabilisierungszeit,

Alternativ oder zusätzlich ist ein Temperatursensor zur Erfassung der Temperatur der Strahlungsquelle an der Strahlungsquelle angeordnet und die Auswertevorrichtung bestimmt die Zustandsänderung unter Verwendung von Informationen einer Temperatur der Strahlungsquelle.

Die Strahlungsvorrichtung kann auf der dem Pol zugewandten Seite des Solarstrahlungssensors angeordnet sein, in einem Abstand bei dem weniger als 5% der Diffusstrahlung eines isotrop hellen Himmels durch die Strahlungsvorrichtung blockiert wird.

Die elektromagnetische Strahlung, die die Strahlungsquelle in Richtung des Solarstrahlungssensors emittiert, kann beispielsweise Licht im sichtbaren Wellenlängenbereich sein. Durch den Verlauf der optischen Achse A, entlang derer die elektromagnetische Strahlung emittiert wird, wird die Richtung, in die die elektromagnetische Strahlung emittiert wird, vorgegeben. Durch die Verwendung der elektromagnetische Strahlung emittierenden Strahlungsquelle ist das Messsystem unabhängig von der Umgebungsbeleuchtung, beispielweise von der Solarstrahlung, sodass die Zustandsänderung in vorteilhafterweise auch bei Nacht bestimmt werden kann.

Bei dem Ausführungsbeispiel. Bei dem die Strahlungsquelle der Strahlungsvorrichtung ferner einen Temperatursensor zur Erfassung der Temperatur der Strahlungsquelle aufweist, kann der Temperatursensor beispielsweise als ein PT100-Mess-sensor ausgebildet sein und direkt neben der Strahlungsquelle, etwa in einem Abstand von 1 cm, angeordnet sein.

An der Strahlungsquelle kann ein weiterer Strahlungssensor zur Erfassung der von der Strahlungsquelle emittierten Strahlung angeordnet sein. Die erfassten Strahlungswerte der Strahlungsquelle können zur Steuerung der Strahlungsquelle, zur Kontrolle der von der Strahlungsquelle emittierten Strahlung und/oder in der Bestimmung der Zustandsänderung des Solarstrahlungssensors verwendet werden.

Die Auswertevorrichtung steuert die Strahlungsquelle an und bestrahlt somit den Solarstrahlungssensor mit der emittierten Strahlung. Durch die emittierte Strahlung erzeugt der beispielswiese verschmutzte Solarstrahlungssensor einen Messwert. Diesen Messwert erfasst die Auswertevorrichtung und vergleicht diesen mit einem zuvor ermittelten Messwert, beispielsweise mit einem Messwert eines weniger verschmutzten Solarstrahlungssensors. Aus dem Vergleich beider Messwerte bestimmt die Auswertevorrichtung die Zustandsänderung des Solarstrahlungssensors, beispielsweise einen Verschmutzungsgrad. Der Zustand, dessen Änderung die Auswertevorrichtung bestimmt, kann im Rahmen der Erfindung auch ein etwaiger Defekt des Solarstrahlungssensors sein.

Die Auswertevorrichtung kann die Zustandsänderung durch eine zusätzliche, zuvor durchgeführte Messung des Solarstrahlungssensors und verwendet Informationen mindestens eines Hintergrundsignals und/oder mindestens eines thermischen Offset-Wertes bestimmen. Durch die Verwendung einer zusätzlichen weiteren Messung stehen der Auswertevorrichtung weitere Messwerte zur Verfügung, sodass die Zustandsänderung des Solarstrahlungssensors besonders genau bestimmt werden kann. Für den Fall, dass der Zustand des Solarstrahlungssensors beispielsweise einen Verschmutzungsgrad beschreibt, kann die zuvor durchgeführte weitere Messung des Solarstrahlungssensors eine Messung im unverschmutzten bzw. gereinigten Zustand des Solarstrahlungssensors sein. Diese Messung dient somit als weitere Referenzmessung und ein Verschmutzungsgrad des Solarstrahlungssensors kann im Vergleich zu der Messung des verschmutzten Solarstrahlungssensors in vorteilhafter Weise bestimmt werden.

Informationen mindestens eines Hintergrundsignals können beispielsweise Informationen bezüglich der Umgebungslichtverhältnisse sein. Derartige Umgebungslichtverhältnisse können beispielsweise die Lichtverhältnisse sein, die zu unterschiedlichen Tageszeiten, beispielsweise bei Eintritt der Dämmerung, in der Nacht oder zur Mittagszeit vorherrschen.

Zusätzlich oder alternativ kann vorgesehen sein, dass die Auswertevorrichtung die Strahlungsquelle derart ansteuert, dass die Strahlungsquelle die elektromagnetische Strahlung mindestens für die Dauer einer Stabilisierungszeit emittiert, wobei die Auswertevorrichtung die Zustandsänderung des Solarstrahlungssensors nach der Stabilisierungszeit bestimmt. Die Stabilität der Intensität der emittierten elektromagnetischen Strahlung kann insbesondere nach dem Beginn der Emission der elektromagnetischen Strahlung gewissen Schwankungen unterliegen. Nach der Stabilisierungszeit weist die emittierten elektromagnetischen Strahlung annähernd eine Konstanz auf, sodass die Auswertevorrichtung die Zustandsänderung des Solarstrahlungssensors nach der Stabilisierungszeit besonders vorteilhaft bestimmt.

Dabei kann bei erhöhten Umgebungstemperaturen bevorzugt eine längere Stabilisierungszeit verwendet werden.

Zusätzlich oder alternativ kann vorgesehen sein, dass die Auswertevorrichtung die Zustandsänderung des Solarstrahlungssensors unter Verwendung von Informationen einer Temperatur der Strahlungsquelle bestimmt. Das erfindungsgemäße Messsystem kann in Regionen verwendet werden, in denen besonders abwechslungsreiche klimatische Bedingungen vorherrschen. Dabei beeinflusst die Umgebungstemperatur direkt die Temperatur der Strahlungsquelle, welche wiederum die Intensität der emittierten elektromagnetischen Strahlung beeinflusst, wodurch die Bedingungen bei der Messwerterzeugung nachteilig inkonstant werden können. Mit anderen Worten: Unberücksichtigte Änderungen Temperatur der Strahlungsquelle führen zu fehlerbehafteten Messwerten des Solarstrahlungssensors.

Die Informationen der Temperatur der Strahlungsquelle können mit dem Temperatursensor, der in oder an der Strahlungsquelle angeordnet sein kann, erfasst werden. Durch die Verwendung von Informationen der Temperatur der Strahlungsquelle kann die Auswertevorrichtung den Temperatureinfluss auf die Intensität der von der Strahlungsquelle emittierten elektromagnetischen Strahlung berücksichtigen und die Zustandsänderung des Solarstrahlungssensors kann somit in besonders vorteilhafter Weise und besonders genau bestimmen. Die Temperatur der Strahlungsquelle lässt beispielsweise auch einen Rückschluss darauf zu, ob die emittierte elektromagnetische Strahlung konstant ist, wenn beispielsweise nach einer Stabilisierungszeit keine weitere Temperaturänderung der Strahlungsquelle erfolgt.

Der Solarstrahlungssensor kann beispielsweise ein Pyranometer sein, wobei die Sensorebene horizontal angeordnet ist.

Im Folgenden wird die Erfindung unter Bezugnahme auf die nachfolgende Figur näher erläutert.

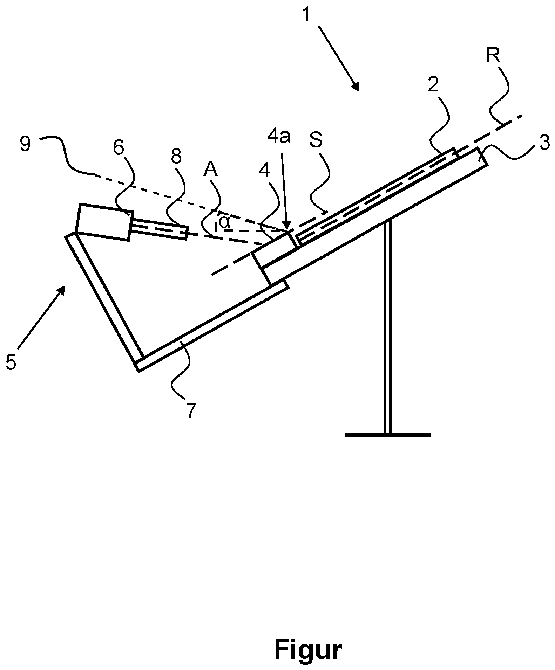

Die Figur zeigt eine schematische Darstellung des erfindungsgemäßen Solarelements mit einem Messsystem zur Bestimmung einer Zustandsänderung eines Sensors für Solarstrahlung.

Das erfindungsgemäße Solarelement 1 weist eine nicht zu verschattende Fläche 2 auf. Die Fläche 2 kann beispielsweise durch ein Solarmodul gebildet sein und bildet eine Receiverfläche, die in einer Receiverebene R liegt. Grundsätzlich kann die Fläche 2 jede beliebige Fläche eines Solarelements 1 sein, die nicht verschattet werden soll oder darf Ein Rahmen 3 dient zur Halterung des Solarmoduls. In der dargestellten Ausführungsform liegt das Solarmodul auf dem Rahmen 3 auf, selbstverständlich kann das Solarmodul auch in dem Rahmen 3 eingesetzt sein, auf andere Weise durch diesen gehalten werden oder , rahmenlos gehaltert sein. Ferner weist das Solarelement 1 einen Sensor 4 für Solarstrahlung mit einer Sensorebene S auf, wobei der Sensor 4 an dem Rahmen 3 unterhalb der Fläche 2 angeordnet ist. Selbstverständlich kann der Sensor 4 auch neben der Fläche 2 angeordnet sein. Die Sensorebene S ist dabei parallel zu der Receiverebene R angeordnet, wobei die Sensorebene S alternativ auch in der Receiverebene R angeordnet sein kann. Durch eine derartige deckungsgleiche oder parallele Anordnung werden beide Ebenen (R, S) mit dem identischen Einfallswinkel der Solarstrahlung bestrahlt.

Ferner ist an dem Rahmen 3 des Solarelements 1 ein Geräteträger 7 befestigt, wobei der Geräteträger 7 nach unten von dem Rahmen 3 absteht und eine Strahlungsvorrichtung 6 haltert. Die Strahlungsvorrichtung 6 weist eine elektromagnetische Strahlung emittierende Strahlungsquelle, beispielsweise eine LED-Lampe, auf und emittiert die elektromagnetischen Strahlung entlang der optischen Achse A in Richtung des Sensors 4. In der dargestellten Ausführungsform ist an der Strahlungsvorrichtung 6 ein Kollimator 8 angeordnet, wodurch die emittierte elektromagnetische Strahlung in vorteilhafter Weise mit einem nahezu parallelen Strahlengang auf den Sensor 4 emittiert wird.

Die Strahlungsvorrichtung 6 ist unterhalb einer Ebene 9 angeordnet, die durch die Oberkante 4a des Sensors 4 verläuft und beispielsweise in einem Winkel α=5° zur Horizontalen in Richtung des Sensors 4 geneigt ist (in der Figur ist der Winkel α zur verbesserten Darstellung größer gezeigt). Mit anderen Worten: Die Strahlungsvorrichtung 6 lediglich geringfügig oberhalb des Sensors 4 angeordnet ist, sodass eine Verschattung des Sensors 4 und der Fläche 2 durch die Strahlungsvorrichtung 6 oder durch an der Strahlungsvorrichtung 6 angeordnete weitere Bauteile, wie beispielsweise dem Kollimator 8, vermieden wird. Durch die Vermeidung der Verschattung beeinträchtigt das Messsystem nicht die Funktion beispielsweise eines Solarmoduls, das die Fläche 2 bildet, und die Auswertevorrichtung bestimmt die Zustandsänderung des Sensors 4 besonders zuverlässig.

In der dargestellten Ausführungsform ist das erfindungsgemäße Solarelement 1 mit dem Messsystem 5 um einen Winkel geneigt, selbstverständlich wird die Funktionsweise des erfindungsgemäßen Solarelements 1 bei anderen Neigungswinkeln nicht beeinträchtigt. Somit ist das erfindungsgemäße Solarelement 1 auch bei variierenden Neigungen, beispielsweise wenn das Solarelement 1 der Sonne nachgeführt wird, einsatzfähig.

### Bezugszeichenliste

- 1: Solarelement
- 2: Fläche
- 3: Rahmen
- 4: Sensor für Solarstrahlung
- 4a: Oberkante
- 5: Messsystem
- 6: Strahlungsvorrichtung
- 7: Geräteträger
- 8: Kollimator
- 9: Ebene
- A: optische Achse der elektromagnetischen Strahlung
- R: Receiverebene
- S: Sensorebene

## Patentansprüche

1. Solarelement (1) mit mindestens Fläche (2), die eine Receiverfläche und eine Receiverebene (R) definiert, einem Sensor (4) für Solarstrahlung mit einer Sensorebene (S), wobei der Sensor (4) neben oder unterhalb der Fläche (2) angeordnet ist, und mit einem Messsystem (5) zur Bestimmung einer Zustandsänderung des Sensors (4) für Solarstrahlung,
wobei der Sensor (4) mit der Sensorebene (S) parallel oder in einem Winkel von maximal 10° zu der Receiverebene (R) oder in der Receiverebene (R) angeordnet ist,
wobei das Messsystem (5) mindestens eine Strahlungsvorrichtung (6) und eine Auswertevorrichtung aufweist,
wobei die Strahlungsvorrichtung (6) eine elektromagnetische Strahlung emittierende Strahlungsquelle aufweist, wobei die elektromagnetische Strahlung entlang einer optischen Achse (A) emittiert wird und auf den Sensor (4) gerichtet ist, und
wobei die Auswertevorrichtung die mindestens eine Strahlungsquelle ansteuert, mindestens einen Messwert des Sensors (4) erfasst und die Zustandsänderung des Sensors (4) durch einen Vergleich des mindestens einen erfassten Messwertes mit mindestens einem zuvor ermittelten Messwert bestimmt,
**dadurch gekennzeichnet,**
**dass** die Strahlungsvorrichtung (6) unterhalb einer Ebene (9) angeordnet ist, die durch eine Oberkante (4a) des Sensors (4) verläuft und in einem Winkel α≤10° zur Horizontalen in Richtung des Sensors (4) geneigt ist.

2. Solarelement nach Anspruch 1, **dadurch gekennzeichnet, dass** die Strahlungsquelle (6) eine LED ist.

3. Solarelement nach Anspruch 1 oder 2, **gekennzeichnet durch** einen an der Strahlungsquelle (2) angeordneten weiteren Strahlungssensor zur Erfassung der von der Strahlungsquelle (2) emittierten Strahlung.

4. Solarelement nach einem der Ansprüche 1 bis 3, **gekennzeichnet durch** einen an der Strahlungsquelle angeordneten Temperatursensor zur Erfassung der Temperatur der Strahlungsquelle.

5. Solarelement nach einem der Ansprüche 1 bis 4, **dadurch gekennzeichnet, dass** die Strahlungsvorrichtung (6) mindestens einen Kollimator (8) aufweist.

6. Solarelement nach einem der Ansprüche 1 bis 5, **dadurch gekennzeichnet, dass** der Sensor (4) für Solarstrahlung als eine Referenzzelle bildende Solarzelle ausgebildet ist.

7. Solarelement nach einem der Ansprüche 1 bis 6, **dadurch gekennzeichnet, dass** die Auswertevorrichtung die Zustandsänderung durch eine zusätzliche zuvor durchgeführte weitere Messung des Sensors (4) bestimmt und Informationen mindestens eines Hintergrundsignals und/oder mindestens eines thermischen Offset-Wertes verwendet.

8. Solarelement nach einem der Ansprüche 1 bis 7, **dadurch gekennzeichnet, dass** die Auswertevorrichtung die Strahlungsquelle zur Emission von elektromagnetischer Strahlung für mindestens eine Dauer einer Stabilisierungszeit ansteuert, wobei die Auswertevorrichtung die Zustandsänderung nach der Stabilisierungszeit bestimmt.

9. Solarelement nach einem der Ansprüche 1 bis 8, **dadurch gekennzeichnet, dass** die Auswertevorrichtung die Zustandsänderung wiederholt bestimmt.

10. Solarelement nach einem der Ansprüche 1 bis 9 **dadurch gekennzeichnet, dass** die Auswertevorrichtung die Zustandsänderung in aufeinanderfolgenden Nächten bestimmt.

11. Solarelement nach einem der Ansprüche 1 bis 10, **dadurch gekennzeichnet, dass** die Auswertevorrichtung bei der Bestimmung der Zustandsänderung eine Einfallswinkelkorrektur und/oder des Einfallswinkels von im Betrieb auf den Sensor auftreffender Solarstrahlung vornimmt.

12. Solarelement nach einem der Ansprüche 1 bis 11, **dadurch gekennzeichnet, dass** die Auswertevorrichtung die Zustandsänderung unter Verwendung von Informationen einer Temperatur der Strahlungsquelle bestimmt.

## Claims

1. A solar element (1) with at least one surface (2) which defines a receiver surface and a receiver plane (R), a solar radiation sensor (4) with a sensor plane (S), the sensor (4) being arranged adjacent or below the surface (2), and comprising a measuring system (5) for determining a state change of the solar radiation sensor (4),
wherein the sensor (4) is arranged with the sensor plane (S) parallel to or under an angle of at most 10° with respect to the receiver plane (R) or in the receiver plane (R),
wherein the measuring system (5) comprises at least one radiation device (6) and an evaluation device,
wherein the radiation device (6) comprises a radiation source emitting electromagnetic radiation, the electromagnetic radiation being emitted along an optical axis (A) and being directed onto the sensor (4), and
wherein the evaluation device controls the at least one radiation source, detects at least one measured value of the sensor (4) and determines the state change of the sensor (4) by comparing the at least one detected measured value to at least one measured value determined before,
**characterized in that**
the radiation device (6) is arranged below a plane (9) which passes through an upper edge (4a) of the sensor (4) and is inclined towards the sensor (4) under an angle α≤10° with respect to the horizontal line.

2. The solar element according to claim 1, **characterized in that** the radiation source (6) is a LED.

3. The solar element according to claim 1 or 2, **characterized by** a further radiation sensor arranged at the radiation source (2) to detect the radiation emitted from the radiation source (2).

4. The solar element according to any one of claims 1 to 3, **characterized by** a temperature sensor arranged at the radiation source to detect the temperature of the radiation source.

5. The solar element according to any one of claims 1 to 4, **characterized in that** the radiation device (6) comprises at least one collimator (8).

6. The solar element according to any one of claims 1 to 5, **characterized in that** the solar radiation sensor (4) is designed as a solar cell forming a reference cell.

7. The solar element according to any one of claims 1 to 6, **characterized in that** the evaluation device determines the state change by an additional, previously performed further measurement of the sensor (4) and uses information from at least one background signal and/or at least one thermal offset value.

8. The solar element according to any one of claims 1 to 7, **characterized in that** the evaluation device controls the radiation source for the emission of electromagnetic radiation for at least a duration of a stabilization time, the evaluation device determining the state change after the stabilization time.

9. The solar element according to any one of claims 1 to 8, **characterized in that** the evaluation device repeatedly determines the state change.

10. The solar element according to any one of claims 1 to 9, **characterized in that** the evaluation device determines the state change in successive nights.

11. The solar element according to any one of claims 1 to 10, **characterized in that**, when determining the state change, the evaluation device performs a correction of the angle of incidence and/or of the angle of incidence of solar radiation incident on the sensor during operation.

12. The solar element according to any of claims 1 to 11, **characterized in that** the evaluation device determines the state change using information from the temperature of the radiation source.

## Revendications

1. Élément solaire (1) comportant au moins une surface (2) qui définit une surface de réception et un plan de réception (R), un capteur (4) pour le rayonnement solaire comportant un plan de capteur (S), dans lequel le capteur (4) est disposé à côté ou en dessous de la surface (2), et comportant un système de mesure (5) permettant de déterminer un changement d'état du capteur (4) pour le rayonnement solaire, dans lequel le capteur (4) est disposé avec le plan de capteur (S) parallèlement ou à un angle de 10° maximum par rapport au plan de réception (R) ou dans le plan de réception (R),
dans lequel le système de mesure (5) présente au moins un dispositif de rayonnement (6) et un dispositif d'évaluation,
dans lequel le dispositif de rayonnement (6) présente une source de rayonnement émettant un rayonnement électromagnétique, dans lequel le rayonnement électromagnétique est émis le long d'un axe optique (A) et est dirigé vers le capteur (4), et
dans lequel le dispositif d'évaluation commande l'au moins une source de rayonnement, détecte au moins une valeur de mesure du capteur (4) et détermine le changement d'état du capteur (4) par une comparaison de l'au moins une valeur de mesure détectée avec au moins une valeur de mesure déterminée auparavant,
**caractérisé en ce**
**que** le dispositif de rayonnement (6) est disposé en dessous d'un plan (9) qui passe par un bord supérieur (4a) du capteur (4) et qui est incliné d'un angle α ≤ 10° par rapport à l'horizontale en direction du capteur (4).

2. Élément solaire selon la revendication 1, **caractérisé en ce que** la source de rayonnement (6) est une DEL.

3. Élément solaire selon la revendication 1 ou 2, **caractérisé par** un autre capteur de rayonnement disposé sur la source de rayonnement (2) et permettant de détecter le rayonnement émis par la source de rayonnement (2).

4. Élément solaire selon l'une des revendications 1 à 3, **caractérisé par** un capteur de température disposé sur la source de rayonnement et permettant de détecter la température de la source de rayonnement.

5. Élément solaire selon l'une des revendications 1 à 4, **caractérisé en ce que** le dispositif de rayonnement (6) présente au moins un collimateur (8).

6. Élément solaire selon l'une des revendications 1 à 5, **caractérisé en ce que** le capteur (4) pour le rayonnement solaire est conçu comme une cellule solaire formant une cellule de référence.

7. Élément solaire selon l'une des revendications 1 à 6, **caractérisé en ce que** le dispositif d'évaluation détermine le changement d'état par une autre mesure supplémentaire du capteur (4) réalisée auparavant et utilise des informations d'au moins un signal de fond et/ou d'au moins une valeur de déphasage thermique.

8. Élément solaire selon l'une des revendications 1 à 7, **caractérisé en ce que** le dispositif d'évaluation commande la source de rayonnement pour l'émission d'un rayonnement électromagnétique pendant au moins une durée d'un temps de stabilisation, dans lequel le dispositif d'évaluation détermine le changement d'état après le temps de stabilisation.

9. Élément solaire selon l'une des revendications 1 à 8, **caractérisé en ce que** le dispositif d'évaluation détermine de manière répétée le changement d'état.

10. Élément solaire selon l'une des revendications 1 à 9, **caractérisé en ce que** le dispositif d'évaluation détermine le changement d'état pendant des nuits successives.

11. Élément solaire selon l'une des revendications 1 à 10, **caractérisé en ce que** le dispositif d'évaluation effectue, lors de la détermination du changement d'état, une correction d'angle d'incidence de l'angle d'incidence du rayonnement solaire incident sur le capteur pendant le fonctionnement.

12. Élément solaire selon l'une des revendications 1 à 11, **caractérisé en ce que** le dispositif d'évaluation détermine le changement d'état en utilisant des informations d'une température de la source de rayonnement.
